# EUROPEAN PATENT APPLICATION

(11) **EP 4 694 041 A1**
(43) Date of publication of application: **11.02.2026**
(21) Application number: 24193876.0
(22) Date of filing: 09.08.2024
(51) Int. Cl.: H04L 12/10, H04L 12/40

(54) **ETHERNET APL COMPATIBLE FIELD DEVICE FOR SUPPLYING A SENSOR UNIT WITH ENERGY**

(71) Applicant: ABB SCHWEIZ AG, 5400 Baden (CH)
(72) Inventor: STRAGIES, Michael, 37079 Göttingen (DE); HORST, Georg, 37154 Northeim (DE); WIEDERHOLD, Frank, 34369 Hofgeismar (DE)
(74) Representative: Maiwald GmbH

(57) **Abstract**

The invention relates to an Ethernet APL compatible field device (100), which is configured for supplying a sensor unit (300) with energy from an APL field switch (200). The field device (100) comprises a first and a second field device port (111, 112) configured for being connected to a corresponding port (221, 222) of the APL field switch (200), a first and a second power decoupling unit (121, 122), connected to the corresponding field device port (111, 112); and a first power conditioning unit (141), connected to the first and the second power decoupling unit (121, 122) and being configured for being connected to the sensor unit (300), and configured for supplying the sensor unit (300) with energy.

## Description

### Technical Field

The invention relates to the field of field devices, particularly to an Ethernet APL compatible field device. The invention further relates to field device system and to a use.

### Background

Ethernet APL (Advanced Physical Layer) is a technology designed for industrial applications. APL uses conventional Fieldbus cables and operates as a two-wire, loop-powered Ethernet model. It allows direct connectivity of field devices to Ethernet-based systems. Ethernet APL defines power-classes, which may be used within hazardous areas. Particularly, some Ethernet APL power-classes define how a device should behave in an explosive atmosphere, some shortly called "EX-standards" (EX for "explosive"). However, such "EX-standards", on the other hand, may define quite restrictive limits for the power that is allowed to flow over a connection of an APL power switch. These restrictive power limits may be too low for operating at least some types of field devices. Hence, a field device would be desirable that can be connected to a power-restricted Ethernet APL network, but is able to provide sufficient power even for a power demand higher than defined for an APL power switch.

### Description

It is an objective of the disclosure to provide an improved Ethernet APL compatible field device. This objective is achieved by the subject-matter of the independent claims. Further embodiments are evident from the dependent claims and the following description.

One aspect relates to an Ethernet APL compatible field device, configured for supplying a sensor unit with energy from an APL field switch, the field device comprising: A first and a second field device port configured for being connected to a corresponding port of the APL field switch, a first and a second power decoupling unit, connected to the corresponding field device port; and a first power conditioning unit, connected to the first and the second power decoupling unit and being configured for being connected to the sensor unit, and configured for supplying the sensor unit with energy.

The Ethernet APL compatible field device may, e.g., be compatible with a power-restricted Ethernet APL class according to IEEE 802.3cg-2019, for instance compatible with APL Class A (15 V, max. 0.54 W) or Class C (15 V, max. 1.1 W). A connection to the Ethernet APL network, particularly to the APL power switch, may consist of two lines or wires, which may be used both for data and energy transfer. Requirements regarding hazardous areas, particularly in an explosive atmosphere ("Ex requirements"), may apply. By these definitions, the field device can be intrinsically safe, so that requirements for an Ex "ia" IIC implementation can be fulfilled. For instance, an APL Class A device, with a maximum power of 0.54 W, is suitable even for Zone 0,1 or DIV 1 installations.

The field device may be designed as a kind of "field device core" or "electrical intermediate piece" between the APL field switch and the sensor unit. The sensor unit may be configured for performing measurements, in at least some cases including evaluation, of, e.g., temperature, pressure, flow, distance. The sensor unit may comprise a sensor frontend, e.g. for said applications, and/or a display for displaying any kind of values and/or graphics, particularly measurement values. The sensor unit may comprise a processor, e.g. with memory, which may serve as control unit, as data processing unit and/or for other purposes, e.g. for programming EEPROMS.

The Ethernet APL compatible field device has at least two field device ports, each field device port configured for being connected to a corresponding port of an APL field switch. The field device ports may, e.g., be designed as customer clamps. Each one of the at least two field device ports is connected to a corresponding power decoupling unit. The power decoupling unit is configured for separating a power path and a data path from the Ethernet APL network input. The power decoupling units may comprise a galvanic separation, e.g. a DC/DC converter. The at least two power decoupling units are connected to a (first) power conditioning unit. By this, the power conditioning unit collects the power from the at least two field device ports and is, thus, able to supply the sensor unit with energy, which can be increased, compared to a maximum power, which can be delivered via one field device port only. Thus, not only "smaller" devices like temperature transmitters or pressure measurement devices can be connected to the Ethernet APL compatible field device, but also more power-hungry devices - like some flow device types - can be connected, e.g., to a Class A network.

As a result, the Ethernet APL compatible field device advantageously fulfils, on the one hand, the definitions of the APL-class and is, on the other hand, able to provide sufficient power to a sensor unit, without additional measures or devices, particularly without additional wires and/or without an additional power supply unit. This relates to an extended configuration possibility of an APL field device in an APL network, which is not specified in the APL standard. The aim is to extend the 1-to-1 (point-to-point) relationship, i.e. to establish multiple APL connections to the field device, resulting in advantages in terms of functionality, power budget, availability and costs.

In various embodiments, the field device further comprises a first communication unit, connected to the first (and/or to the second and/or a further) power decoupling unit and being configured for being connected to the sensor unit, and configured for transferring data between the APL field switch and the sensor unit. The data transfer may allow a bidirectional communication between the sensor unit and the Ethernet APL network. These embodiments not only provide energy to the sensor unit, but also allows data communication, based on a consistent concept.

In various embodiments, the field device further comprises a processing unit - e.g. a microcontroller (µC) or another type of microprocessor-, configured for controlling the power conditioning unit and/or the first communication unit. The processing unit may serve for controlling the field device, and/or for supporting functions of the sensor unit.

In various embodiments, the field device further comprises a communication switch, which is connected to the first power decoupling unit and to the second power decoupling unit. The communication switch may be used for switching between the first and the second power decoupling unit, e.g. in cases when a data communication to one of the decoupling units - and/or the field device port - is faulty. These embodiments may advantageously be used for providing a solution with data redundancy to the sensor unit.

In various embodiments, the field device further comprises a second power conditioning unit, which is connected to the second power decoupling unit and is configured for being connected to the sensor unit, and is configured for supplying the sensor unit with energy. These embodiments advantageously combine data redundancy, hardware redundancy and power accumulation from two APL ports. The hardware has complete redundancy, and each one of the APL circuits has its own power conditioning. Optionally, also a second communication unit may be provided.

In various embodiments, the first power conditioning unit is connected to the first power decoupling unit and to the second power decoupling unit. And, the field device further comprises a second communication unit, connected to the second power decoupling unit and being configured for being connected to the sensor unit, and configured for transferring data between the APL field switch and the sensor unit. And it comprises a second processing unit, configured for controlling the second communication unit. These embodiments advantageously combine data redundancy, hardware redundancy and power accumulation from two APL ports. The communication hardware has complete redundancy, power conditioning is shared through one power conditioning circuit.

In various embodiments, the field device further comprises a second communication unit, connected to the second power decoupling unit and being configured for being connected to the sensor unit, and configured for transferring data between the APL field switch and the sensor unit. And it comprises a second processing unit, configured for controlling the second power conditioning unit and the second communication unit. These embodiments advantageously may be a basis for a SIL 3 implementation (SIL: Safety Integrity Level, according to IEC 61508 and/or IEC61511).

In various embodiments, the field device comprises a plurality of field device ports configured for being connected to a corresponding port of the APL field switch, and a plurality of power decoupling units, connected to the corresponding field device port. The first power conditioning unit is connected to the plurality of power decoupling units and being configured for being connected to the sensor unit, and configured for supplying the sensor unit with energy. The plurality of field device ports and power decoupling units may be combined with any one of the embodiments described above.

An aspect relates to a use of a field device described above and/or below for supplying a sensor unit with energy from an APL field switch, particularly with more energy than defined for one single port of the APL field switch.

An aspect relates to a use of a field device described above and/or below for providing data redundancy for a sensor unit connected to the field device. Of course, this type of field device may also provide more energy than defined for one single port of the APL field switch

An aspect relates to a use of a field device described above and/or below for providing hardware redundancy for a sensor unit connected to the field device. The redundancy may be used both for energy and for data.

An aspect relates to a use of a field device described above and/or below for providing hardware redundancy for a sensor unit according to SIL 3 (SIL: Safety Integrity Level, according to IEC 61508 and/or IEC61511).

An aspect relates to a sensor unit, configured for being connected to a field device as described above and/or below. At least some of these sensor units may have elements that suit particularly well to a field device described above and/or below, for instance by having well-adapted mechanical interfaces, e.g. a compatible plug and jack.

In various embodiments, the sensor unit comprises a redundant data processing unit, configured for connecting to a field device as described above and/or below. This redundant data processing unit in the sensor unit may advantageously be used as a basis for consistent data redundancy, which may be offered, e.g., as a redundancy solution comprising a combination of field device and sensor unit.

An aspect relates to a field device system, comprising a field device as described above and/or below and a sensor unit as described above and/or below.

It should be noted that two or more embodiments described above and/or below can be combined, as far as technically feasible.

For further elucidation, the disclosure is described by means of embodiments shown in the figures. These embodiments are to be considered as examples only, but not as limiting.

### Brief Description of the Drawings

### The drawings depict:

- **Fig. 1**: schematically an example of an Ethernet APL network connection according to an embodiment;
- **Fig. 2a** - **6**: schematically Ethernet APL compatible field devices, each one according to an embodiment.

### Detailed Description of Embodiments

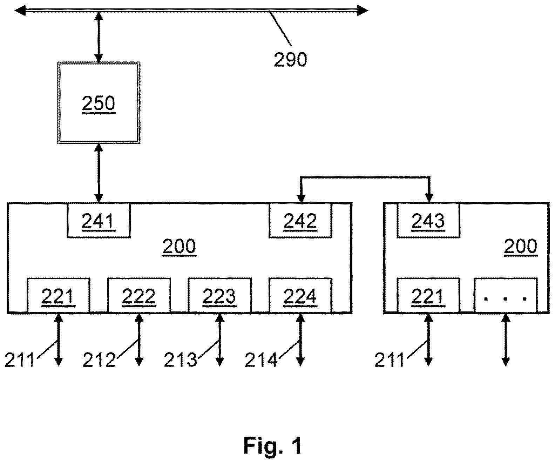

**Fig. 1** shows schematically an example of an Ethernet APL network connection according to an embodiment. The Ethernet APL network or bus 290 is connected to an APL power switch 250. One so-called "trunk" of the APL power switch 250 is connected to a port 241 of an APL field switch 200. A further APL field switch 200 may be connected ports 242 and 243, respectively. Each APL field switch 200 may have a plurality of field switch connections 221 - 224, which may be connected to one or more field devices via corresponding field device connections 211 - 214.

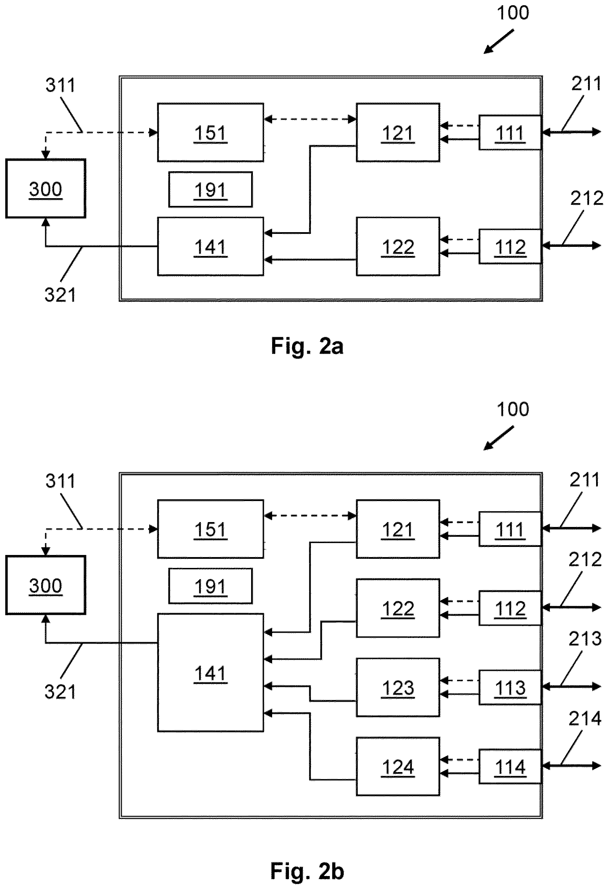

**Fig. 2a** shows schematically an embodiment of an Ethernet APL compatible field device 100. The field device 100 has a first field device port 111 and a second field device port 112. The field device ports 111 and 112 are connected to a port 221, 222 of the APL field switch 200 (see **Fig. 1**) via corresponding field device connections 211 and 212. The first field device port 111 is connected to a first power decoupling unit 121, the second field device port 112 is connected to a second power decoupling unit 122. The first power decoupling unit 121 splits data (broken line) from energy (straight line), coming from the first field device port 111. The data is forwarded to a first communication unit 151, which cares for data communication from and to a sensor unit 300, connected via data connection line 311. The energy is forwarded to a first power conditioning unit 141. The first power conditioning unit 141 is additionally connected to an energy line of the second power decoupling unit 122. By this, the sensor unit 300 is supplied with energy. The energy or power provided to the sensor unit 300 can, thus, advantageously be twice as much as with one single field device connection 211. Furthermore - as will be shown at further embodiments -, this solution provides a consistent concept for several types of solutions that may fit to several types of sensor units 300.

The field device 100 further comprises a processing unit 191, e.g. for controlling functions of the field device 100. The processing unit 191 may also be used for providing functions of the sensor unit 300. This may be particularly advantageous when the field device 100 and the sensor unit 300 are arranged in one housing and/or are sold as a combined field device system solution.

**Fig. 2b** shows schematically an embodiment of an Ethernet APL compatible field device 100. Same reference signs as in **Fig. 2a** designate same or similar elements. This embodiment may be used for types of sensor units 300 with an even higher power demand. To achieve this, the field device 100 has not only two power decoupling units 121, 122 as in **Fig. 2a****,** but four power decoupling units 121 - 124. The power decoupling units 121 - 124 are connected to respective field device ports 111 - 114.

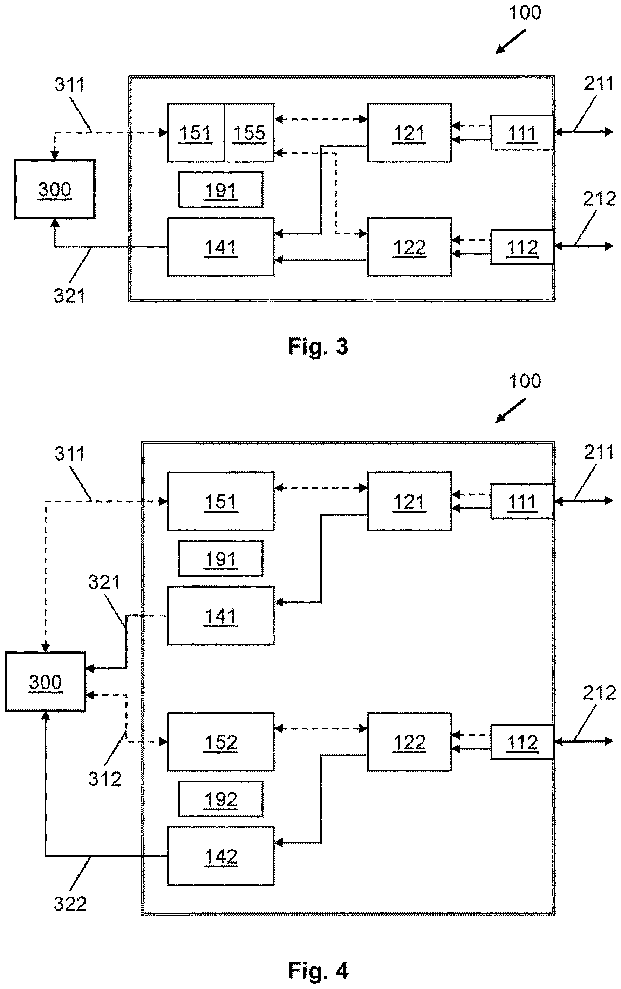

The power decoupling units 121 - 124 are, further, connected to a power conditioning unit 141, which collects the energy from the four Ethernet APL ports and provides this energy to the sensor unit 300. A variation (not shown) may be to use the power decoupling units 121 - 124 as a basis for a highly redundant system, which can be based on up to four data connections from the Ethernet APL network, analogously e.g. to the embodiment shown in **Fig. 3****.**

**Fig. 3** shows schematically an embodiment of an Ethernet APL compatible field device 100. Same reference signs as in **Fig. 2a** designate same or similar elements. **Fig. 3** has, in addition to the embodiment of **Fig. 2a****,** a communication switch 155. The communication switch 155 is connected to both the first power decoupling unit 121 and to the second power decoupling unit 122. The communication switch 155 may be used for switching between the first (121) and the second (122) power decoupling unit, e.g. in cases when a data communication to one of the decoupling units - and/or one of the field device ports 111 or 112 - is faulty. These embodiments may advantageously be used for providing a solution with data redundancy to the sensor unit 300.

**Fig. 4** shows schematically an embodiment of an Ethernet APL compatible field device 100. Same reference signs as in **Fig. 2a** designate same or similar elements. **Fig. 4** has two times a "simple" field device part, each field device part comprising a field device port 111 (or 112), a first power decoupling unit 121 (or 122), a power conditioning unit 141 (or 142), a communication unit 151 (or 152), and a processor 191 (or 192). This embodiment has complete hardware redundancy, and it combines power accumulation (via lines 321 and 322) from two APL ports 111 and 112 with data redundancy (via lines 311 and 312). The sensor unit 300 may use this redundancy concept according to specified requirements.

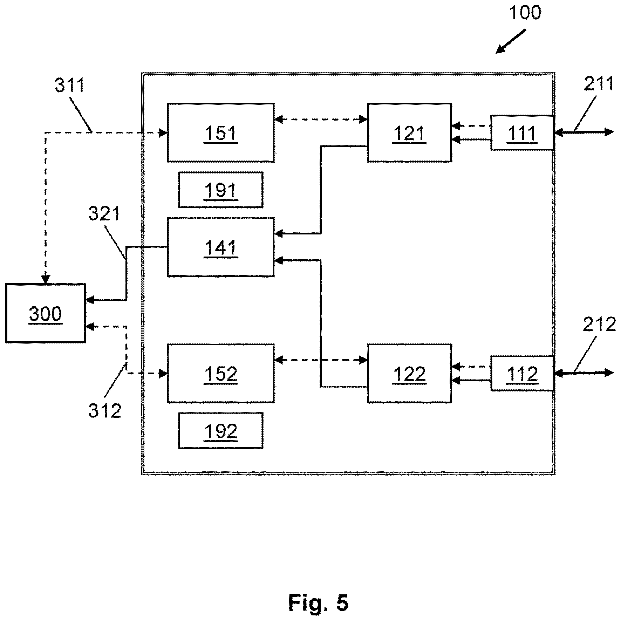

**Fig. 5** shows schematically an embodiment of an Ethernet APL compatible field device 100. Same reference signs as in **Fig. 2a** designate same or similar elements. **Fig. 5** has only one power conditioning unit 141, which combines energy from both APL ports 111 and 112. Furthermore, the sensor unit 300 may use data redundancy via lines 311 and 312 according to specified data redundancy requirements.

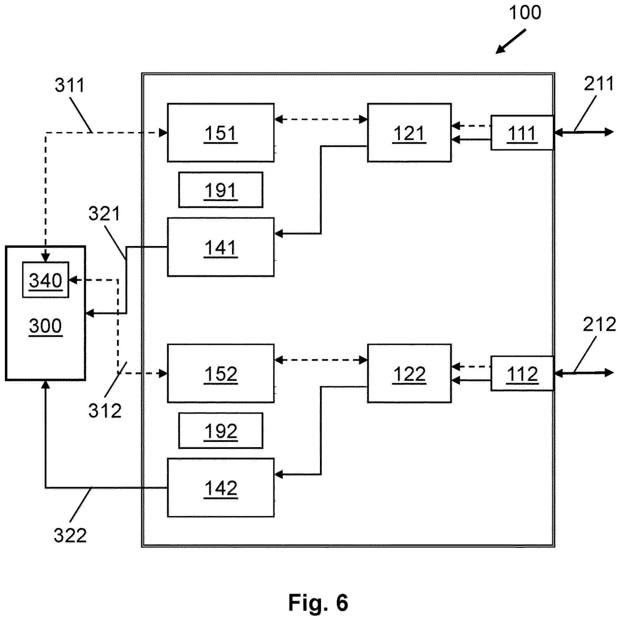

**Fig. 6** shows schematically an embodiment of an Ethernet APL compatible field device 100. Same reference signs as in **Fig. 4** designate same or similar elements. **Fig. 6** has the same redundant hardware as shown in **Fig. 4****,** but the sensor unit 300 has a redundant data processing unit 340, which uses this redundancy as a basis for a SIL 3 compatible field device system solution.

### List of Reference Symbols

- 100: field device
- 111-114: field device port
- 121, 122: power decoupling unit
- 141, 142: power conditioning unit
- 151, 152: communication unit
- 155: communication switch
- 191, 192: processing unit
- 200: APL field switch
- 211 - 214: field device connections
- 221 - 224: field switch connections
- 221: corresponding port
- 241 - 243: power switch connections
- 250: APL power switch
- 290: Ethernet APL bus
- 300: sensor unit
- 311, 312: data connections
- 321, 322: power connections
- 340: redundant data processing unit

## Claims

1. An Ethernet APL compatible field device (100), configured for supplying a sensor unit (300) with energy from an APL field switch (200), the field device (100) comprising:
a first and a second field device port (111, 112) configured for being connected to a corresponding port (221, 222) of the APL field switch (200);
a first and a second power decoupling unit (121, 122), connected to the corresponding field device port (111, 112); and
a first power conditioning unit (141), connected to the first and the second power decoupling unit (121, 122) and being configured for being connected to the sensor unit (300), and configured for supplying the sensor unit (300) with energy.

2. The field device (100) of claim 1, further comprising:
a first communication unit (151), connected to the first power decoupling unit (121) and being configured for being connected to the sensor unit (300), and configured for transferring data between the APL field switch (200) and the sensor unit (300).

3. The field device (100) of claim 1 or 2, further comprising:
a processing unit (191), configured for controlling the power conditioning unit (141) and/or the first communication unit (151).

4. The field device (100) of any one of the claims 1-3,
the first communication unit (151) comprising a communication switch (155), which is connected to the first power decoupling unit (121) and to the second power decoupling unit (122).

5. The field device (100) of any one of the claims 1-3, further comprising:
a second power conditioning unit (142), connected to the second power decoupling unit (122) and being configured for being connected to the sensor unit (300), and being configured for supplying the sensor unit (300) with energy.

6. The field device (100) of any one of the claims 1-3,
wherein the first power conditioning unit (141) is connected to the first power decoupling unit (122) and to the second power decoupling unit (122),
the field device (100) further comprising:
a second communication unit (152), connected to the second power decoupling unit (122) and being configured for being connected to the sensor unit (300),
and configured for transferring data between the APL field switch (200) and the sensor unit (300); and
a second processing unit (192), configured for controlling the second communication unit (152).

7. The field device (100) of any one of the claims 1-3, further comprising:
a second communication unit (152), connected to the second power decoupling unit (122) and being configured for being connected to the sensor unit (300),
and configured for transferring data between the APL field switch (200) and the sensor unit (300); and
a second processing unit (192), configured for controlling the second power conditioning unit (142) and the second communication unit (152).

8. The field device (100) of any one of the claims 1-3, comprising:
a plurality of field device ports (111 - 114) configured for being connected to a corresponding port (221 - 224) of the APL field switch (200), and
a plurality of power decoupling units (121 - 124), connected to the corresponding field device port (111 - 114),
wherein the first power conditioning unit (141) is connected to the plurality of power decoupling units (121 - 124) and being configured for being connected to the sensor unit (300), and configured for supplying the sensor unit (300) with energy.

9. Use of a field device (100) of any one of the claims 1 - 3 for supplying a sensor unit (300) with energy from an APL field switch (200), particularly with more energy than defined for one single port (221) of the APL field switch (200).

10. Use of a field device (100) of claim 4 or 6 for providing data redundancy for a sensor unit (300) connected to the field device (100).

11. Use of a field device (100) of claim 5 for providing hardware redundancy for a sensor unit (300) connected to the field device (100).

12. Use of a field device (100) of claim 7 for providing hardware redundancy for a sensor unit (300) according to SIL 3.

13. A sensor unit (300), configured for being connected to a field device (100) of any one of the claims 1-8.

14. The sensor unit (300) of claim 13, comprising a redundant data processing unit (340), configured for connecting to a field device (100) according to claim 7.

15. A field device system, comprising a field device (100) of any one of the claims 1-8 and a sensor unit (300) according to claim 13.
